# EUROPEAN PATENT APPLICATION

(11) **EP 3 267 665 A2**
(43) Date of publication of application: **10.01.2018**
(21) Application number: 17179525.5
(22) Date of filing: 04.07.2017
(51) Int. Cl.: H04L 29/12, H04W 48/18

(54) **COMMUNICATION APPARATUS, CONTROL METHOD, PROGRAM AND COMPUTER-READABLE STORAGE MEDIUM**

(30) Priority: 04.07.2016 JP 2016132777
(71) Applicant: CANON KABUSHIKI KAISHA, Ohta-ku Tokyo 146-8501 (JP)
(72) Inventor: IDO, Tetsuo, Ohta-ku, Tokyo (JP); MATSUMOTO, Akinobu, Ohta-ku, Tokyo (JP)
(74) Representative: Uffindell, Christine Helen

(57) **Abstract**

A communication apparatus (1) which includes a plurality of network interfaces (210, 211) stores the address of the communication apparatus in a network in association with one of the plurality of network interfaces, decides, if there is a signal to be transmitted, a network interface to be used to transmit the signal out of the plurality of network interfaces, determines whether one or more first addresses associated with the decided network interface are stored, and performs control, if at least one of the first addresses is stored, so as to select the second address out of the first addresses based on a value at least used to set a communicable range, and transmit the signal to be transmitted by using the second address as a transmission source address.

## Description

### BACKGROUND OF THE INVENTION

### Field of the Invention

The present invention relates to a technique of deciding an address used in communication.

### Description of the Related Art

In recent years, it has become a common practice for devices such as a PC (Personal Computer), a printer, and a digital camera to have network functions and to be connected to a network such as the Internet or a home LAN. Further, these devices may have a plurality of interfaces (to be referred to as "I/Fs" hereinafter) to be connected to the network.
For example, each of many smartphones has an LTE (Long Term Evolution) interface and a wireless LAN or Bluetooth® interface. While connected to a wireless LAN formed by an access point in the home, some devices such as printers can concurrently be connected to smartphones as well by the wireless LAN.

When each device having a communication function communicates with another device on the network by using an internet protocol (IP), an IP address for indicating the location of each device on the network is assigned to each device. Then, the respective devices on the network can communicate with each other by deciding a packet transfer path and identifying the devices using the IP addresses. In the IPv4 (Internet Protocol version 4), one IP address generally corresponds to each I/F. On the other hand, in the IPv6 (Internet Protocol version 6) that has prevailed recently, a plurality of IP addresses correspond to one I/F. For example, a communication device according to the IPv6 can have a global unicast address based on network information transmitted from a router when connected to the network. The communication device can also have a link-local address generated by itself when connected to the network. The communication device can further have a unique local unicast address issued by a DHCP server from the DHCP server when the DHCP server exists on the network. In an environment where the IPv4 and the IPv6 are mixed, the communication device has more IP addresses.

If the communication device has a plurality of IP addresses, it needs to select an IP address to be stored in the transmission source IP address field of an IP packet header in packet transmission processing. A communication conforming to the requirement of a user or an application can never be performed unless the communication device selects the transmission source IP address appropriately.

To cope with this, Japanese Patent Laid-Open No. 2011-010206 describes a method for selecting the transmission source IP address of a client in accordance with the contents of transmission data when a server provides a service in accordance with the transmission source IP address. Japanese Patent Laid-Open No. 2013-219830 describes a method for preferentially selecting, in accordance with an application, an IP address of a type without any valid period and an IP address of a type capable of extending the valid period.

When a communication device including a plurality of I/Fs obtains an IP address for each of the plurality of I/Fs, an IP address obtained in the first I/F may be selected and used as a transmission source address in the second I/F. At this time, if connection with a network is disconnected in the first I/F, the IP address obtained in the first I/F cannot be used in some cases. In the network of an IP address obtaining source, it may be recognized that the IP address is not used in the network, and the IP address may be recovered or changed. In these cases, a communication disable state may be brought about unintentionally in the second I/F using the IP address obtained in the first I/F. In the second I/F used for data communication, a packet addressed to the IP address obtained in the first I/F can be received. However, the IP address cannot be used for the above-described reason, leading to the communication disable state unintentionally.

### SUMMARY OF THE INVENTION

The present invention prevents communication from becoming unstable by address selection when a communication apparatus can utilize a plurality of network interfaces.

The present invention in its first aspect provides a communication apparatus as specified in claims 1 to 11.

The present invention in its second aspect provides a control method as specified in claims 12 and 13.

The present invention in its third aspect provides a program as specified in claim 14.

The present invention in its fourth aspect provides a computer-readable storage medium as specified in claim 15.

Further features of the present invention will become apparent from the following description of exemplary embodiments (with reference to the attached drawings).

### BRIEF DESCRIPTION OF THE DRAWINGS

The accompanying drawings, which are incorporated in and constitute a part of the specification, illustrate embodiments of the invention, and together with the description, serve to explain the principles of the invention.
Fig. 1 is a view showing an example of the configuration of a network;
Fig. 2 is a block diagram showing an example of the functional arrangement of a digital camera;
Fig. 3 is a flowchart showing the sequence of packet transmission processing;
Fig. 4 is a flowchart showing the sequence of IP transmission processing;
Fig. 5 is a flowchart showing the sequence of transmission source IP address selection processing; and
Fig. 6 is a flowchart showing the sequence of packet reception processing.

### DESCRIPTION OF THE EMBODIMENTS

An embodiment(s) of the present invention will now be described in detail with reference to the drawings. It should be noted that the relative arrangement of the components, the numerical expressions and numerical values set forth in these embodiments do not limit the scope of the present invention unless it is specifically stated otherwise.

An embodiment of the present invention will be described below with reference to the accompanying drawings.

### (Network Configuration)

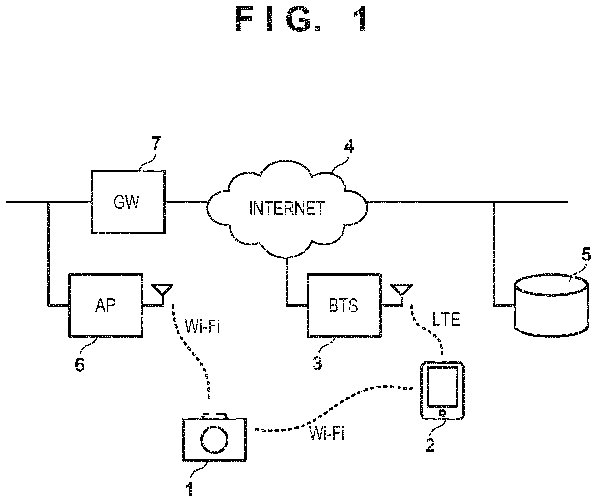

First, an example of the configuration of a network according to this embodiment will be described with reference to Fig. 1. This network includes a digital camera (to be referred to as a "DC" hereinafter) 1, a smartphone 2, a base station (BTS 3) of cellular communication, a server (image server 5) which stores an image and the like, and an access point (AP 6). The BTS 3, the image server 5, and the AP 6 are connected to each other via the Internet 4. For example, the AP 6 can be connected to the Internet 4 via a gateway (GW 7). The AP 6 is a wireless LAN access point but may operate as a base station (or a relay station) that involves wireless communication other than a wireless LAN. The BTS 3 can be a base station which operates in accordance with, for example, an LTE (Long Term Evolution) standard but may be a base station which operates in accordance with, for example, the latest standard such as LTE-Advanced or a past standard such as CDMA. Note that the smartphone 2 may not necessarily be connected to the base station of the cellular communication, and the BTS 3 may be replaced with a base station or a relay station according to another wireless communication standard. Each of the DC 1 and the smartphone 2 is an example of a communication apparatus that operates as a terminal, and an apparatus other than these may be used. That is, each of the DC 1 and the smartphone 2 may be replaced with, for example, a portable device such as a PC (Personal Computer), a PDA (Personal Digital Assistant), or a tablet. Furthermore, each of the DC 1 and the smartphone 2 may be replaced by a printer, a scanner, or the like, and may further be replaced by an arbitrary device fixed to one location and configured not to move.

The DC 1 according to this embodiment includes a plurality of network interfaces, and can be connected to the AP 6 by the wireless LAN and access the Internet by using the first network interface. While establishing wireless connection by the first network interface, the DC 1 can also be connected to the smartphone 2 by the wireless LAN using the second network interface. The smartphone 2 is wirelessly connected to the BTS 3 serving as the LTE base station by using, for example, the LTE, and the DC 1 can access the Internet via the smartphone 2.

Note that the DC 1 will be explained in a description below in terms of its arrangement and processing to be performed. However, the following discussion is applicable to an apparatus other than the DC 1, as a matter of course. That is, a communication apparatus including a plurality of network interfaces may have the function of the DC 1 to be described below, and then may perform processing to be described below. Note that the DC 1 includes two wireless LAN interfaces below. However, the DC 1 may include three or more wireless LAN interfaces. Alternatively, the DC 1 may include a network interface other than the wireless LAN.

### (Digital Camera Arrangement)

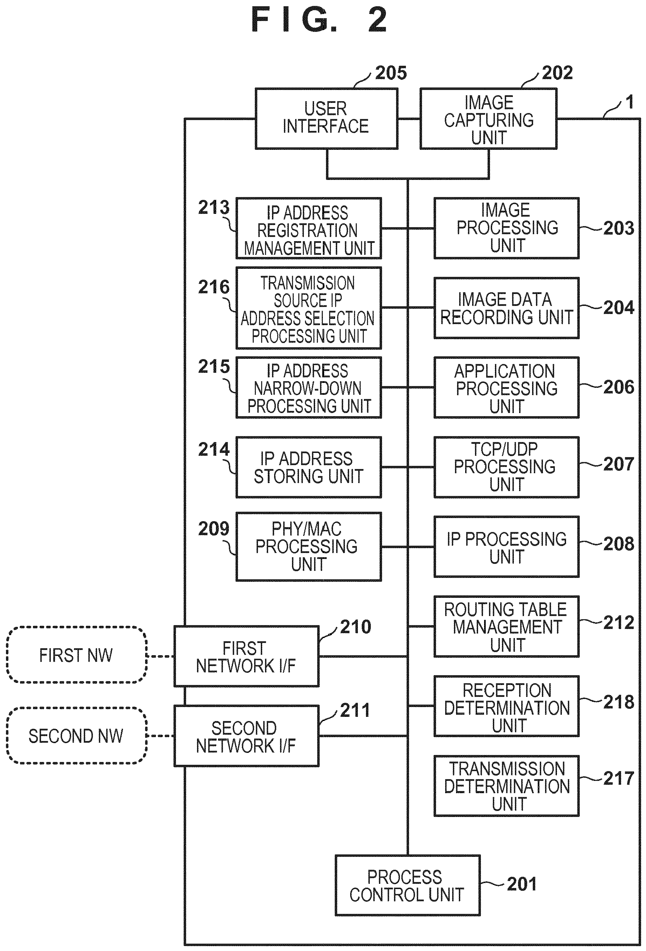

Fig. 2 shows an example of the functional arrangement of the DC 1. The DC 1 includes, for example, hardware concerning image capturing such as a lens and an image sensor, a processor such as a CPU (Central Processing Unit), and a storage device such as a memory and implements the functional arrangement as in Fig. 2 by using the hardware thereof. Note that the processor may not be the CPU but, for example, an Application Specific Integrated Circuit (ASIC) may be used, or a Field Programmable Gate Array (FPGA) or the like may be used to implement a specific function. Further, the number of processors need not be one, but a plurality of processors may be used. For example, a communication processor and a processor which controls the entire DC 1 may be prepared separately. The storage device may be a ROM (Read Only Memory), a RAM (Random Access Memory), or another memory medium, but an arbitrary device capable of holding information can be used.

A process control unit 201 controls the operation of a functional block of the DC 1 in Fig. 2 and also generally controls processing performed by the DC 1.

An image capturing unit 202 is implemented by a lens and an image sensor, and outputs shooting light information input from the lens to another functional block in the format of shooting digital information. An image processing unit 203 performs, on the shooting digital information output from the image capturing unit 202, conversion into a predetermined image data format, image quality adjustment processing such as exposure adjustment, and the like. An image data recording unit 204 records image data processed and output by the image processing unit 203. Note that the image data recording unit 204 can create and record image data management information together with the image data.

A user interface (to be referred to as a "UI" hereinafter) 205 accepts, for example, user operations such as an image capturing operation, an operation of viewing a captured image, and an operation of instructing a communication setting and upload or download of the image data. The UI 205 can also make an information presentation to a user such as display of the captured image or operation display.

An application processing unit 206 executes application programs for performing processing according to the user operations accepted in the UI 205. The application processing unit 206 can also execute an application program which performs processing such as image data management or communication setting management performed by the DC 1 voluntarily independent of the user operations.

A TCP/UDP processing unit 207 performs protocol processing of a TCP (Transmission Control Protocol) or a UDP (User Datagram Protocol). For example, upon receiving a transmission request for data such as the image data from the application processing unit 206, the TCP/UDP processing unit 207 packetizes this transmission data by the protocol processing of the TCP or UDP and outputs the packet to an IP processing unit 208. Moreover, upon receiving a data (TCP or UDP packet) reception notification from the IP processing unit 208, the TCP/UDP processing unit 207 extracts a data portion from this received data and outputs it to the application processing unit 206 by the protocol processing of the TCP or UDP.

The IP processing unit 208 performs IP (Internet Protocol) protocol processing, that is, IPv4 or IPv6 processing. For example, by the IP protocol processing, the IP processing unit 208 performs IP packetization of the TCP or UDP packet of a transmission target received from the TCP/UDP processing unit 207 and outputs the IP packet to a PHY/MAC processing unit 209. Moreover, upon receiving a packet (IP packet) reception notification from the PHY/MAC processing unit 209, the IP processing unit 208 extracts a data portion (TCP or UDP packet) from the received IP packet by the IP protocol processing.
Then, the IP processing unit 208 outputs the extracted TCP or UDP packet to the TCP/UDP processing unit 207.

The PHY/MAC processing unit 209 performs protocol processing of a PHY (physical layer) and MAC (Medium Access Control layer). The PHY/MAC processing unit 209 performs PHY and MAC processing defined by, for example, the IEEE802.11ac standard in communication using the wireless LAN interface. When transmitting a packet, the PHY/MAC processing unit 209 creates an IEEE802.11ac header and a physical header, and generates a packet to be transmitted to the network. Moreover, the PHY/MAC processing unit 209 removes the physical header and the IEEE802.11ac header, and extracts the IP packet with respect to the packet received from the network. The PHY/MAC processing unit 209 can also perform the same processing in communication using a wired LAN interface. The PHY/MAC processing unit 209 can perform, for example, Ethernet header processing, physical header processing, and the like.

A first network interface (to be referred to as a "first I/F" hereinafter) 210 is an input/output end point (for example, physical) with the network for connecting the network and the DC 1. The first I/F 210 can be, for example, a wireless LAN module complying with the IEEE802.11ac standard according to the wireless LAN, an Ethernet module of 1000baseT according to a wired LAN, or the like. In this embodiment, the first I/F 210 is a module of IEEE802.11ac, and the DC 1 is wirelessly connected to the AP 6 via the first I/F 210. As in the first I/F 210, a second network interface (to be referred to as a "second I/F" hereinafter) 211 is an input/output end point with the network (for example, physical) for connecting the network and the DC 1. In this embodiment, the second I/F 211 is a module of IEEE802.11ac, and the DC 1 is wirelessly connected to the smartphone 2 via the second I/F 211. Note that a description will be given here assuming that the first I/F 210 and the second I/F 211 are the wireless LAN interfaces. However, at least one of these may be another network interface such as the wired LAN. The designation "I/F" is generally used below as an abbreviation for a communication interface.

Note that both communications by the first I/F 210 and the second I/F 211 are performed via the common TCP/UDP processing unit 207, IP processing unit 208, and PHY/MAC processing unit 209. However, the present invention is not limited to this. That is, the DC 1 may separately include, for the respective I/Fs, function units each performing processing of at least one of the TCP/UDP, IP, and MAC/PHY. However, the first I/F 210 and the second I/F 211 can at least theoretically, for example, receive a signal by the second I/F 211 by using, for example, the IP address obtained in the first I/F 210.

A routing table management unit 212 manages routing information by, for example, storing entry information which associates at least destination IP address information and I/F information used for transmission with each other. For example, based on the destination IP address information passed from the application processing unit 206 at the time of transmitting the IP packet, the routing table management unit 212 decides an I/F used for transmission.

An IP address registration management unit 213 performs a process of externally obtaining or internally generating the IP address of the DC 1 itself. The IP address registration management unit 213 can externally obtain the IP address by, for example, receiving the IP address from the DHCP server on the network in accordance with a DHCP protocol. The IP address registration management unit 213 can also obtain the IP address by obtaining a global unicast address in accordance with network information notified from a router on the network in the IPv6. Moreover, the IP address registration management unit 213 generates the IP address by serving as the DHCP server by itself to give itself the IP address or an IP address generated by an Auto IP. At this time, the IP address registration management unit 213 decides to which I/F the IP address given to itself is given. The IP address registration management unit 213 can also generate a link local unicast address for each I/F in the IPv6.

When obtaining the IP address of the DC 1 itself, the IP address registration management unit 213 causes an IP address storing unit 214 to store, in association with each other, I/F identification information of the I/F used to obtain that IP address and that IP address. When generating the IP address inside the DC 1, the IP address registration management unit 213 also causes the IP address storing unit 214 to store, in association with each other, I/F identification information of an I/F to which that IP address is given and that IP address.

The IP address storing unit 214 stores the IP address of the DC 1 and I/F identification information associated with that IP address. The IP address storing unit 214 treats them as, for example, IP address management information using a certain IP address and I/F identification information associated with it as a unit. Then, the IP address storing unit 214 creates IP address management information for each of all the IP addresses and makes the list of the IP address management information, managing all the IP addresses. Note that the IP address storing unit 214 may hold the list of all the IP addresses and the list of the IP addresses by I/F in which only IP addresses associated with an I/F for each of the I/Fs are collected. In this case, the IP address storing unit 214 can make or update any or all of these lists when, for example, registering a new IP address. An IP address narrow-down processing unit 215 creates, as an I/F-specific IP address list, only IP addresses associated with a designated I/F out of the IP addresses of the DC 1 stored in the IP address storing unit 214. Note that the IP address narrow-down processing unit 215 may perform a process of only deciding use of the IP address list of a specific I/F if the IP address storing unit 214 makes and manages the I/F-specific IP address list.

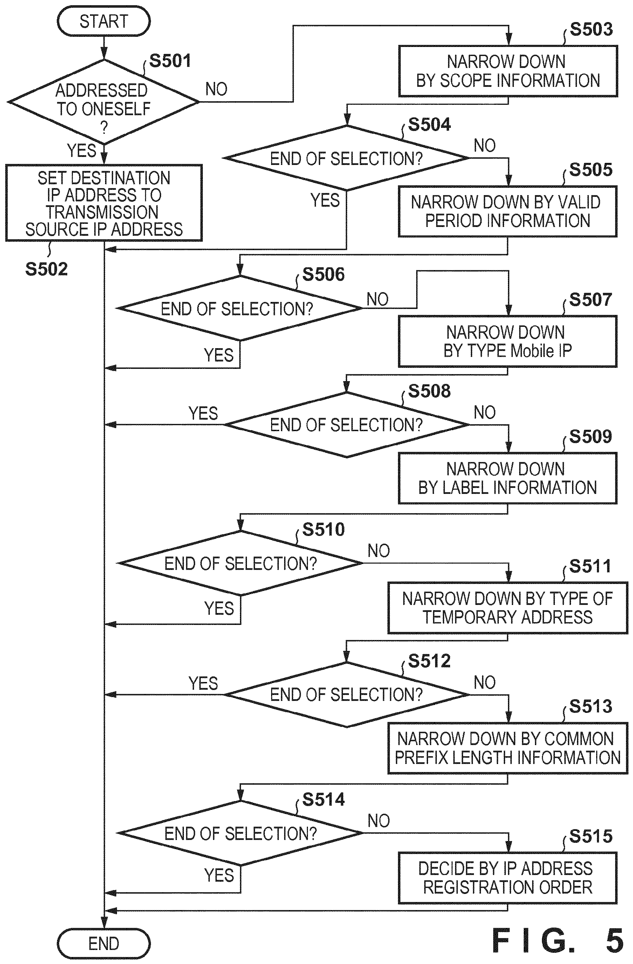

A transmission source IP address selection processing unit 216 performs transmission source IP address selection processing on the IP address list obtained by the process of the IP address narrow-down processing unit 215. An example of the sequence of the processing by the transmission source IP address selection processing unit 216 will be described later with reference to Fig. 5.

A transmission determination unit 217 confirms whether a transmission source IP addresses is undecided for IP packets to be transmitted after IP transmission processing by the IP processing unit 208 and discards a packet whose transmission source IP address is not decided. A reception determination unit 218 determines whether to transfer this packet for IP reception processing performed by the IP processing unit 208 after packet reception processing by the PHY/MAC processing unit 209. For example, the reception determination unit 218 refers to and obtains an IP address indicated in the field of the destination IP address of the packet after the packet reception processing. Next, the reception determination unit 218 refers to the I/F-specific IP address list made by the IP address narrow-down processing unit 215 and confirms whether the list includes the obtained IP address. If the I/F-specific IP address list does not include the obtained IP address, the reception determination unit 218 then discards a packet including the obtained IP address.

### (Processing Sequence)

The sequence of processing performed by the above-described DC 1 will now be described.

### [Processing in Packet Transmission]

First, processing when the DC 1 uploads image data to the image server 5 communicable via the network will be described. In the following, the DC 1 uses the first I/F 210 to access the Internet via the AP 6 and the GW 7, and uploads the image data to the image server 5 present ahead.

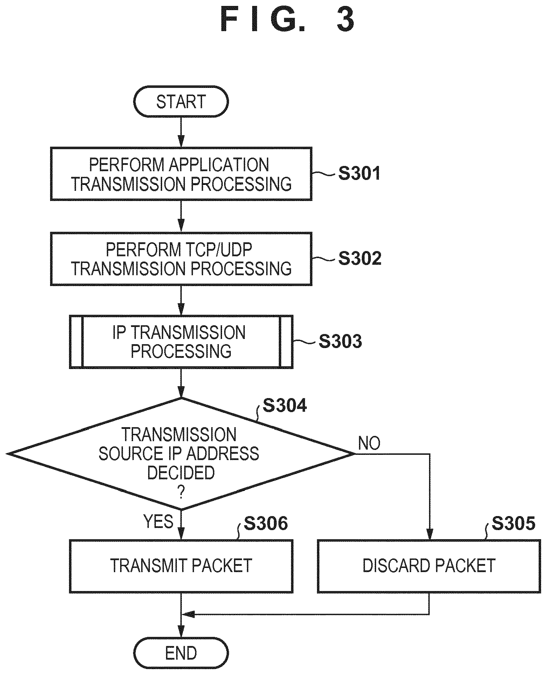

Fig. 3 is a flowchart showing an example of the sequence of packet transmission processing performed when the DC 1 transmits a packet. Note that in the following, the user completes capturing an image using the DC 1, and image data obtained as a result of image capturing is recorded in the image data recording unit 204. Note that the processing of Fig. 3 can be performed each time transmission target data (packet) is generated.

First, assume that the UI 205 accepts a user operation of instructing the DC 1 to upload the image data recorded in the image data recording unit 204 to the image server 5. Note that the DC 1 grasps the IP address of the image server 5 by a name resolution protocol, or the user knows that IP address, and designation is received via the UI 205. Then, the application processing unit 206 establishes TCP connection with the image server 5 and transmits the image data, and thus issues, to the TCP/UDP processing unit 207, a TCP connection establishment request addressed to the IP address of the image server 5 (step S301).

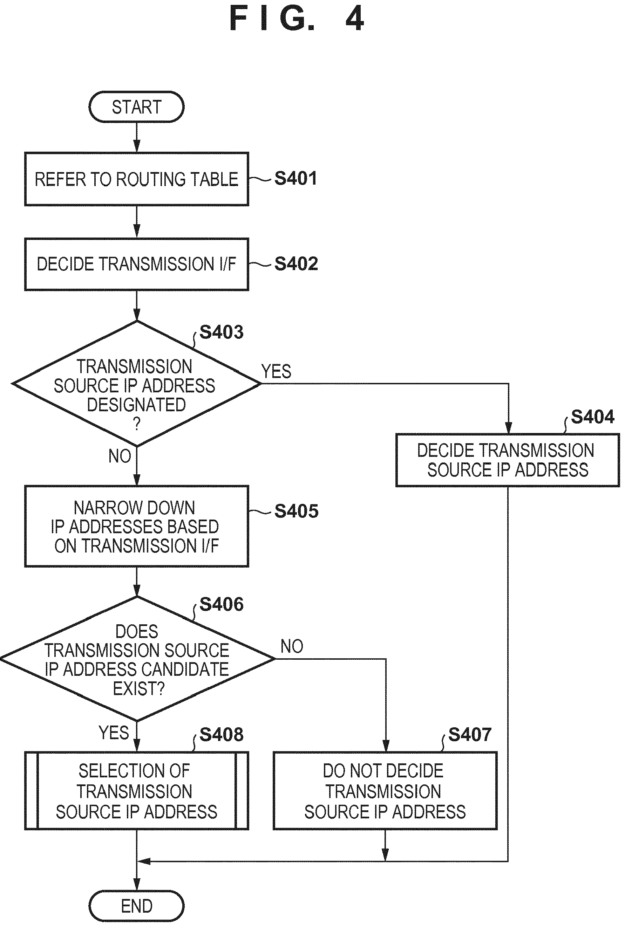

Then, the TCP/UDP processing unit 207 creates a synchronize packet for TCP (TCP SYN packet) and issues, to the IP processing unit 208, an IP packet transmission request addressed to the IP address of the image server 5 (step S302). The IP processing unit 208 creates an IP header addressed to the IP address of the image server 5 and also performs transmission source IP address selection processing (step S303). The processing in step S303 will be described in detail later with reference to Fig. 4.

Subsequently, the transmission determination unit 217 confirms whether the transmission source IP address is decided as a result of the processing by the IP processing unit 208 (step S304) and discards the created packet (step S305) if the transmission source IP address is not decided (NO in step S304). On the other hand, if the transmission source IP address is decided (YES in step S304), the transmission determination unit 217 issues a packet transmission request to the PHY/MAC processing unit 209 (step S306).

The processing in step S303 performed by the IP processing unit 208 will now be described in more detail with reference to Fig. 4.

Upon receiving the IP packet transmission request from the TCP/UDP processing unit 207, the IP processing unit 208 refers to the routing information managed by the routing table management unit 212 (step S401). Then, based on the IP address information of the image server 5, the IP processing unit 208 decides an I/F used for transmission (step S402). Here, the IP processing unit 208 selects the first I/F 210 as a transmission I/F, as described above.

The IP processing unit 208 confirms whether the transmission source IP address is designated by the application processing unit 206 (step S403). If the address is designated (YES in step S403), the process advances to step S404. If the address is not designated (NO in step S403), the process advances to step S405. Note that it can be determined in step S403 whether the designated transmission source IP address is stored in association with one of a plurality of communication I/Fs included in the DC 1. In this case, the IP processing unit 208 advances the process to step S404 if the designated transmission source IP address is stored in association with one of the plurality of communication I/Fs. On the other hand, the IP processing unit 208 may not use the designated transmission source IP address if the designated transmission source IP address is stored in association with none of the plurality of communication I/Fs. If the IP processing unit 208 does not use the designated transmission source IP address, it decides, for example, not to transmit a signal and directly ends the process.

Note that it may be determined in step S403 that the IP address stored in association with the transmission I/F (for example, the first I/F 210) decided in step S402 is designated as the transmission source IP address. In this case, the IP processing unit 208 advances the process to step S404 if the designated transmission source IP address is stored in association with the communication I/F decided in step S402. On the other hand, the IP processing unit 208 can refrain from using the designated transmission source IP address if the designated transmission source IP address is not stored in association with the communication I/F decided in step S402. At this time, the IP processing unit 208 does not transmit a signal if it does not use the designated transmission source IP address, and may directly end the process or may advance the process to step S405. The IP processing unit 208 decides the designated IP address as a transmission source address in step S404, ending the process.

On the other hand, in step S405, the IP address narrow-down processing unit 215 refers to an IP address list which manages all the IP addresses stored in the IP address storing unit 214. Then, the IP address narrow-down processing unit 215 extracts an IP address associated with the first I/F 210 from the IP address list and makes an IP address list for the first I/F 210 (step S405). If an IP address list for each I/F is stored in the IP address storing unit 214, the IP address narrow-down processing unit 215 may only read out an IP address list related to the first I/F in step S405.

Referring to the IP address list for the first I/F 210, the transmission source IP address selection processing unit 216 confirms whether an IP address included in that list exists, that is, whether the list includes one or more IP addresses (step S406). If the IP address does not exist in the IP address list for the first I/F 210 (NO in step S406), the transmission source IP address selection processing unit 216 then ends the process without deciding the transmission source IP address (step S407). On the other hand, if the IP address list for the first I/F 210 includes one or more IP addresses (YES in step S406), the transmission source IP address selection processing unit 216 advances the process to step S408.

In step S408, the transmission source IP address selection processing unit 216 selects the transmission source IP address out of the IP addresses included in the IP address list for the first I/F 210. This processing will be described with reference to Fig. 5. Note that transmission source IP address selection processing shown in Fig. 5 is merely an example, and processing different from the processing shown in Fig. 5 in order, type of narrow-down determination rule, number, and the like may be performed. Note that the IP addresses are narrowed down based on the transmission I/F information in step S405 described above before a process in step S503 to be described later.

The transmission source IP address selection processing unit 216 first determines whether a destination IP address matches the IP address in the IP address list for the first I/F 210 (step S501). That is, the transmission source IP address selection processing unit 216 confirms whether the IP packet is addressed to the first I/F 210 of the DC 1. If the IP packet is addressed to the first I/F 210 of the DC 1 (YES in step S501), the transmission source IP address selection processing unit 216 decides the transmission source IP address as the destination IP address (step S502), ending the processing of Fig. 5.

On the other hand, if the IP packet is not addressed to the first I/F 210 of the DC 1 (NO in step S501), the transmission source IP address selection processing unit 216 advances the process to step S503. In step S503, the transmission source IP address selection processing unit 216 compares scope information of the destination IP address with scope information of each IP address included in the IP address list for the first I/F 210, narrowing down the IP address of suitable scope. The scope information is a value used to set a communicable range and information indicating the range of the IP address.
The transmission source IP address selection processing unit 216 can extract, for example, the IP address of the same scope as the destination IP address out of the IP addresses included in the IP address list for the first I/F 210. The transmission source IP address selection processing unit 216 can extract, for example, an IP address with global scope information if the scope of the destination IP address is global or an IP address with link local scope information if the destination IP address is link local. Alternatively, the transmission source IP address selection processing unit 216 may extract, for example, an IP address having scope with a range at least equal to or larger than the scope of the destination IP address out of the IP addresses included in the IP address list for the first I/F 210. The transmission source IP address selection processing unit 216 can extract, for example, an IP address with global or link local scope information if the scope of the destination IP address is link local.

For example, if there exists no IP address which satisfies a condition in the IP addresses included in the IP address list for the first I/F 210, the transmission source IP address selection processing unit 216 can leave all the IP addresses and advances to a next narrow-down condition. That is, the transmission source IP address selection processing unit 216 extracts one or more IP addresses by narrow-down processing as described above. The transmission source IP address selection processing unit 216 can perform update so as to leave only the IP address obtained as a result of the narrow-down processing in the IP address list for the first I/F 210. Note that such processing will also be performed similarly in narrow-down processing hereinafter. That is, also in steps S505, S507, S509, S511, and S513 below, one or more IP addresses are extracted even if all the IP addresses remaining in the IP address list for the first I/F 210 so far do not satisfy the narrow-down condition. An unextracted IP address is excluded from the IP address list for the first I/F 210.

The transmission source IP address selection processing unit 216 determines whether to end the process (step S504) by determining whether the IP addresses can be narrowed down to one IP address as a result of the narrow-down processing in step S503. Note that as in step S504, it is also determined in steps S506, S508, S510, S512, and S514 to be described below whether one IP address is specified as a result of the narrow-down processing, and it is determined that the process ends if only one IP address is obtained. Note that if the transmission source IP address selection processing unit 216 determines that the process ends (YES in step S504), it decides one IP address remaining in the IP address list for the first I/F 210 as a transmission source IP address. On the other hand, the transmission source IP address selection processing unit 216 determines not to end the process (NO in step S504) if narrowing down to one IP address is not completed and advances the process to step S505. That is, the transmission source IP address selection processing unit 216 performs further narrow-down processing if two or more IP addresses remain in the IP address list for the first I/F 210.

In step S505, the transmission source IP address selection processing unit 216 confirms valid period information of each IP address remaining in the IP address list for the first I/F 210 and extracts an IP address with a suitable valid period. The transmission source IP address selection processing unit 216 can extract, for example, an IP address with an unexpired valid period or an IP address whose remaining period of validity is equal to or more than a predetermined length out of the IP addresses included in the IP address list for the first I/F 210. Subsequently, the transmission source IP address selection processing unit 216 determines whether to end the process (step S506) by determining whether the IP addresses are narrowed down to one IP address as a result of the narrow-down processing in step S505 as described with reference to step S504. When determining to end the process (YES in step S506), the transmission source IP address selection processing unit 216 decides one IP address remaining in the IP address list for the first I/F 210 as a transmission source IP address. On the other hand, if the transmission source IP address selection processing unit 216 determines not to end the process (NO in step S506), it advances the process to step S507.

In step S507, the transmission source IP address selection processing unit 216 extracts, out of the respective IP addresses remaining in the IP address list for the first I/F 210, an IP address of a type Mobile IP. Subsequently, the transmission source IP address selection processing unit 216 decides one IP address remaining in the IP address list for the first I/F 210 as a transmission source IP address if it determines to end the process (YES in step S508), as in step S504. On the other hand, the transmission source IP address selection processing unit 216 advances the process to step S509 if it determines not to end the process (NO in step S508).

In step S509, the transmission source IP address selection processing unit 216 extracts an IP address based on label information out of the IP addresses remaining in the IP address list for the first I/F 210. The transmission source IP address selection processing unit 216 can extract, for example, an IP address with the same label information as the destination IP address out of the IP addresses included in the IP address list for the first I/F 210. Note that the label information here can be information, for example, given by an application or the user to each IP address and capable of designating a priority or grouping. Subsequently, the transmission source IP address selection processing unit 216 decides one IP address remaining in the IP address list for the first I/F 210 as a transmission source IP address if it determines to end the process (YES in step S510), as in step S504. On the other hand, the transmission source IP address selection processing unit 216 advances the process to step S511 if it determines not to end the process (NO in step S510).

In step S511, the transmission source IP address selection processing unit 216 extracts an IP address with the type of each IP address remaining in the IP address list for the first I/F 210 being a temporary address. This temporary address corresponds to, for example, an anonymous address of, for example, the IPv6. Subsequently, the transmission source IP address selection processing unit 216 decides one IP address remaining in the IP address list for the first I/F 210 as a transmission source IP address if it determines to end the process (YES in step S512), as in step S504. On the other hand, the transmission source IP address selection processing unit 216 advances the process to step S513 if it determines not to end the process (NO in step S512).

In step S513, the transmission source IP address selection processing unit 216 narrows down the IP addresses based on prefix information of each IP address remaining in the IP address list for the first I/F 210 and prefix information of the destination IP address. For example, the transmission source IP address selection processing unit 216 specifies the length of a portion of the prefix information of the IP addresses in the IP address list for the first I/F 210 containing the common prefix information with the destination IP address. Then, the transmission source IP address selection processing unit 216 can extract an IP address which satisfies a condition such as an IP address with the length of the portion containing the common prefix information being the longest, or equal to or larger than a predetermined length. Note that in step S515, the transmission source IP address selection processing unit 216 can set all the IP addresses as extraction targets if the IP address with the length of the portion containing the common prefix information being equal to or larger than the predetermined length is not included in the IP address list for the first I/F 210. Alternatively, if there exist a plurality of IP addresses each having the length of the portion containing the common prefix information equal to or more than the predetermined length, the transmission source IP address selection processing unit 216 may leave the plurality of IP addresses in the IP address list. Subsequently, the transmission source IP address selection processing unit 216 decides one IP address remaining in the IP address list for the first I/F 210 as a transmission source IP address if it determines to end the process (YES in step S514), as in step S504.
On the other hand, the transmission source IP address selection processing unit 216 advances the process to step S515 if it determines not to end the process (NO in step S514).

In step S515, the transmission source IP address selection processing unit 216 confirms registration order information of the respective IP addresses remaining in the IP address list for the first I/F 210, decides one IP address registered lastly, and sets it as a transmission source IP address. The transmission source IP address selection processing unit 216 thus ends the process. Note that the transmission source IP address selection processing unit 216 may select not the most recently registered IP address but may select, for example, the most recently used IP address or may select an IP address having the highest frequency of use in step S515.

Note that the transmission source IP address selection processing unit 216 may select an IP address to be used to transmit a signal for each I/F when an IP address is newly registered in the IP address list. For example, the transmission source IP address selection processing unit 216 may preselect, in accordance with the registration order of the IP addresses, the IP address registered lastly, as in step S515 described above. In this case, in the processing of step S408, the preselected IP address can be output as a final selection result in accordance with the I/F decided in step S402.

It is possible, by thus selecting the transmission source IP addresses out of the IP addresses obtained or generated in the I/F used for data communication, to prevent occurrence of a communication disable state being caused by an influence from an I/F not used for the data communication.

### [Processing in Packet Reception]

An IP address selection method when the DC 1 receives a service inquiry from, for example, the image server 5 will now be described. The DC 1 selects, for example, its own IP address used to judge whether a packet should be received. Note that in the following, the DC 1 uses the first I/F 210 to access the Internet via the AP 6 and the GW 7, and receives the service inquiry from the image server 5.

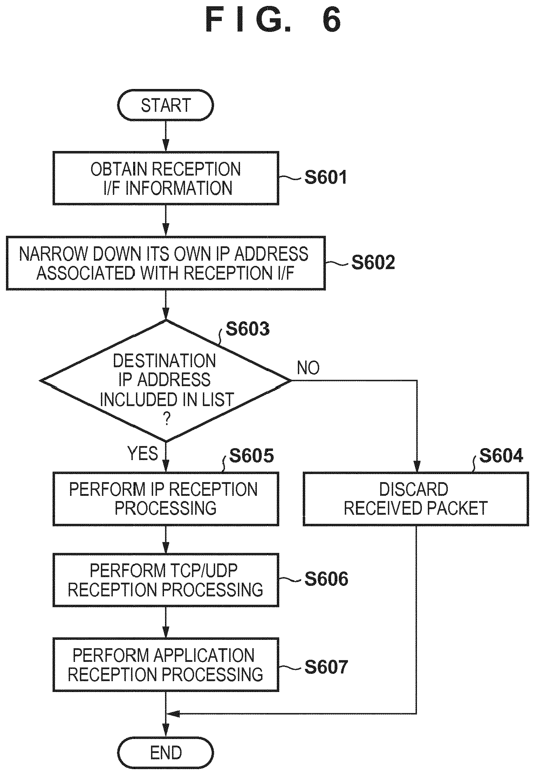

Fig. 6 is a view showing the sequence of processing when the DC 1 receives a packet. Note that in the following, the DC 1 uploads images from both the first I/F 210 and the second I/F 211 to the image server 5, and thus the image server 5 knows a plurality of IP addresses of the DC 1.

The image server 5 transmits, by using the UDP, service inquiries to the plurality of IP addresses associated with the DC 1 in order to inquire whether or not the DC 1 updates service information. Then, the DC 1 receives, via the AP 6 and the GW 7, that service inquiry packet in the first I/F 210.

At this time, upon receiving the packet in the first I/F 210, the DC 1 extracts data in an IP packet format in the PHY/MAC processing unit 209. The reception determination unit 218 obtains I/F (to be referred to as a "reception I/F" hereinafter) information used to receive that packet for the data in the IP packet format (step S601). The reception determination unit 218 determines here that the first I/F 210 is the reception I/F.

Based on reception I/F information, the IP address narrow-down processing unit 215 makes an IP address list unique to the first I/F 210 (step S602). Alternatively, if the IP address list for the first I/F 210 is made and stored in the IP address storing unit 214, the IP address narrow-down processing unit 215 may only decide to use the stored IP address list in step S602.

The reception determination unit 218 confirms whether an IP address indicated in a destination IP address field of the received packet is included in the IP address list for the first I/F 210 (step S603). If the destination IP address of the received packet is not included in the IP address list for the first I/F 210 (NO in step S603), the reception determination unit 218 discards this received packet (step S604) and ends the processing in Fig. 6. On the other hand, if the destination IP address of the received packet is included in the IP address list for the first I/F 210 (YES in step S603), the reception determination unit 218 advances the process to step S605.

In step S605, the IP processing unit 208 performs IP reception processing and extracts data in a UDP packet format. Then, the TCP/UDP processing unit 207 extracts, from the data in the UDP packet format, data to be passed to the application processing unit 206 (step S606). The application processing unit 206 processes the data passed from the TCP/UDP processing unit 207 (step S607). Here, the application processing unit 206 collects and responds to the service information in response to the service inquiry from the image server 5.

It is possible, by thus selecting an IP address when receiving a signal by itself out of the IP addresses obtained or generated in the I/F used for the data communication, to prevent the occurrence of a communication disable state being caused by the influence from the I/F not used for the data communication.

Note that in the above-described embodiment, an example has been described in which the first I/F 210 is selected as a network interface used for communication. However, the same processing can also be performed when the second I/F 211 is selected.

Further, in the above-described embodiment, the description has been given by taking the IP addresses as an example. However, an address may not necessarily be in an IP address format as long as it is information indicating the address of the DC 1 on the network. Similarly, it is apparent that terminologies used in the description above are used for an exemplary purpose and may be replaced by other terms each indicating the same role.

According to the present invention, it is possible to prevent communication from becoming unstable by address selection if the communication apparatus can utilize the plurality of network interfaces.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. It will of course be understood that this invention has been described above by way of example only, and that modifications of detail can be made within the scope of this invention.

## Claims

1. A communication apparatus (1) comprising:
a plurality of network interfaces (210, 211);
storage means (214) for storing an address of the communication apparatus in a network in association with one of the plurality of network interfaces;
decision means (208) for deciding, if there is a signal to be transmitted, a network interface to be used to transmit the signal out of the plurality of network interfaces;
determination means (215) for determining whether one or more first addresses associated with the network interface decided by the decision means are stored in the storage means; and
control means (216) for performing control, if at least one of the first addresses is stored in the storage means, so as to select a second address out of the first addresses based on a value used at least to set a communicable range, and transmit the signal to be transmitted by using the second address as a transmission source address.

2. The apparatus according to claim 1, wherein the address is an IP address,
the value used to set the communicable range is scope information of the IP address, and
the determination by the determination means is made before the second address is selected based on the scope information.

3. The apparatus according to claim 1 or 2, wherein the control means is configured to perform control so as not to transmit the signal to be transmitted if the first address is not stored in the storage means.

4. The apparatus according to claim 2 or 3, wherein selection of the second address out of the first addresses is a process of outputting, as the second address, one address selected when an address is newly stored in the storage means in association with the network interface decided by the decision means.

5. The apparatus according to any one of claims 1 to 3, wherein each time the signal to be transmitted is generated,
the decision means is configured to decide a network interface to be used to transmit the signal out of the plurality of network interfaces,
the determination means is configured to determine whether one or more first addresses associated with the network interface decided by the decision means are stored in the storage means, and
the control means is configured to perform control according to whether the one or more first addresses are stored in the storage means.

6. The apparatus according to any one of claims 1 to 5, wherein if a transmission source address of the signal to be transmitted is designated by a user of the communication apparatus, and the designated transmission source address is stored in the storage means in association with one of the plurality of network interfaces, the control means is configured to perform control so as to transmit the signal to be transmitted by using the designated transmission source address regardless of whether the one or more first addresses are stored in the storage means.

7. The apparatus according to any one of claims 1 to 5, wherein if a transmission source address of the signal to be transmitted is designated by a user of the communication apparatus, and the designated transmission source address is stored in the storage means in association with the network interface decided by the decision means, the control means is configured to perform control so as to transmit the signal to be transmitted by using the designated transmission source address.

8. The apparatus according to any one of claims 1 to 5, wherein if a transmission source address of the signal to be transmitted is designated by a user of the communication apparatus, the control means is configured to perform control so as to transmit the signal to be transmitted by using the designated transmission source address regardless of whether the one or more first addresses are stored in the storage means.

9. A communication apparatus (1) comprising:
a plurality of network interfaces (210, 211);
storage means (214) for storing an address of the communication apparatus in a network in association with one of the plurality of network interfaces;
determination means (218) for determining, if a signal is received, whether a destination address included in the signal is stored in the storage means in association with a network interface used to receive the signal out of the plurality of network interfaces; and
control means for performing control, if the destination address is not stored in the storage means in association with the network interface used to receive the signal, so as to discard the received signal.

10. The apparatus according to any one of claims 1 to 9, wherein the storage means is configured to store a network interface out of the plurality of network interfaces used when the communication apparatus externally obtains an address of the communication apparatus, in association with the obtained address.

11. The apparatus according to any one of claims 1 to 10, wherein if the communication apparatus internally generates an address of the communication apparatus targeted to one network interface out of the plurality of network interfaces, the storage means is configured to store the one network interface and the generated address in association with each other.

12. A control method for a communication apparatus (1) which includes a plurality of network interfaces (210, 211) and storage means (214) for storing an address of the communication apparatus in a network in association with one of the plurality of network interfaces, the method comprising:
deciding (S402), if there is a signal to be transmitted, a network interface to be used to transmit the signal out of the plurality of network interfaces;
determining (S406) whether one or more first addresses associated with the decided network interface are stored in the storage means; and
performing (S408, S503, S306) control, if at least one of the first addresses is stored in the storage means, so as to select a second address out of the first addresses based on a value used at least to set a communicable range, and transmit the signal to be transmitted by using the second address as a transmission source address.

13. A control method for a communication apparatus (1) which includes a plurality of network interfaces (210, 211) and storage means (214) for storing an address of the communication apparatus in a network in association with one of the plurality of network interfaces, the method comprising:
determining (S603), if a signal is received, whether a destination address included in the signal is stored in the storage means in association with a network interface used to receive the signal out of the plurality of network interfaces; and
performing (S604) control, if the destination address is not stored in the storage means in association with the network interface used to receive the signal, so as to discard the received signal.

14. A program which, when run on a device, causes the device to execute a method according to claim 12 or claim 13.

15. A computer-readable storage medium storing a program according to claim 14.
